Europäisches Patentamt

(19) European Patent Office

Office européen des brevets

(11) Numéro de publication: **0 030 502**
**B1**

(12) **FASCICULE DE BREVET EUROPEEN**

(45) Date de publication du fascicule du brevet: **23.11.83**

(51) Int. Cl.³: **F 16 D 55/224**

(21) Numéro de dépôt: **80401723.4**

(22) Date de dépôt: **02.12.80**

(54) **Frein à disque.**

(30) Priorité: **05.12.79 FR 7929852**

(43) Date de publication de la demande:
**17.06.81 Bulletin 81/24**

(45) Mention de la délivrance du brevet:
**23.11.83 Bulletin 83/47**

(84) Etats contractants désignés:
**DE GB IT SE**

(56) Documents cités:
**EP - A - 0 023 138**
**FR - A - 2 240 382**
**FR - A - 2 262 226**
**FR - A - 2 417 680**
**FR - A - 2 422 863**
**GB - A - 1 532 572**

(73) Titulaire: **SOCIETE ANONYME D.B.A.**
**Centre Paris Pleyel**
**F-93521 St-Denis Cédex 01 (FR)**

(72) Inventeur: **Courbot, Pierre**
**1 bis rue d'Herivaux**
**F-95400 Villiers le Bel (FR)**
Inventeur: **Carré, Jean-Jacques**
**100, avenue du Président Wilson**
**F-93100 Montreuil (FR)**

(74) Mandataire: **Poidatz, Emmanuel et al,**
**Service Brevets Bendix 44 rue François 1er**
**F-75008 Paris (FR)**

Courier Press, Leamington Spa, England.

## Frein à disque

La présente invention a pour objet un frein à disque.

L'invention vise plus particulièrement un frein à disque dont l'étrier est monté coulissant sur un support fixe dans une ouverture duquel sont reçus en ancrage et en coulissement axial deux organes de friction susceptibles de venir en engagement de friction avec les faces opposées d'un disque tournant lors de la mise en oeuvre d'un moteur de frein agissant directement sur l'un des organes de friction et, par réaction au travers de l'étrier coulissant, sur l'autre organe de friction, connue du brevet d'invention GB—A—1 531 572.

La liaison coulissante entre l'étrier et le support fixe peut être assurée au moyen d'une paire de colonnettes comme proposé dans la demande européenne EP—A—0 023 138. Les colonnettes sont alors fixées, soit à l'étrier soit au support fixe, et sont reçues en coulissement dans des alésages formés dans le support fixe ou dans l'étrier. Dane ce type de coulissement, la résistance au coulissement de l'étrier par rapport au support fixe, provenant soit des phénomènes de corrosion soit d'impuretés présentes entre les colonnettes et les alésages peut être évitée au moyen de soufflets de protection étanche protégeant les colonnettes et leurs alésages. Toutefois, dans ce mode de coulissement, il est nécessaire que les colonnettes et les alésages en vis-à-vis soient parfaitement alignés et parallèles. Tout défaut d'alignement ou de parallélisme affecte immédiatement la qualité de coulissement de l'étrier sur le support fixe et il en résulte un freinage irrégulier avec usure inégale des éléments de friction.

Afin de remédier à ces inconvénients, le brevet d'invention GB—A—1 531 572 propose de réaliser la liaison coulissante entre l'étrier et le support fixe au moyen d'une seule colonnette montée d'un côté de l'étrier et au moyen de surfaces de coulissement complémentaires planes formées de l'autre côté de l'étrier pour limiter les mouvements de basculement de l'étrier autoure de la colonnette. Dans ce type de frein, les surfaces de coulissement planes sont ouvertes aux intempéries et sujettes aux accumulations d'impuretés et à la corrosion. Dans certains cas ces surfaces de coulissement peuvent se nettoyer d'elles-mêmes sous l'effet de mouvements de coulissement et de vibrations relatives des surfaces.

Toutefois, dans ce type de frein le remplacement des organes de friction, lorsque les garnitures de friction qui leur sont associées sont usées, est une opération compliquée, nécessitant le démontage soit de la colonnette soit d'une clavette de guidage de l'étrier par translation axiale de cette dernière. De plus, ce type de frein comporte généralement des moyens élastiques prévus pour maintenir lesdites surfaces de coulissement en contact et des ressorts anti-bruit agissant sur les organes de friction. On comprend qu'ainsi le remplacement des organes de friction nécessite le démontage et le remontage de nombreux composants.

La demande européenne EP—A—0 023 138 citée ci-dessus enseigne de prévoir des moyens de butée afin d'éviter un échappement accidental de l'étrier lorsque celui-ci est dans sa position basculée alors qu'il n'est maintenu que par une seule colonnette. En position normale de fonctionnement du frein ces moyens de butée sont inopérants et ne participent pas au coulissement du frein, celui-ci étant assuré par la deuxième colonnette. Néanmoins, elle présente des inconvénients similaires au brevet anglais précité à savoir la complexité du démontage, dans le cas présent une des colonnettes doit être démontée afin de pouvoir basculer l'étrier autoure de l'autre colonnette en vue du remplacement des garnitures de friction.

L'invention propose un frein à disque du type à étrier coulissant dans lequel le remplacement des organes de friction soit une opération simple et qui offre toutes les garanties de fiabilité quant à un remontage correct de l'ensemble des composants du frein.

Dans ce but, l'invention propose un frein à disque du type indiqué dans le paragraphe 1 dans lequel l'étrier est monté coulissant au moyen d'une colonnette axiale fixée à l'étrier ou au support fixe et qui coopère avec un alésage formé en vis-à-vis dans le support fixe ou dans l'étrier et au moyen de deux surfaces complémentaires de coulissement axial, formées sur l'étrier et sur le support fixe, pour permettre des mouvements relatifs de l'étrier par rapport au support fixe tout en s'opposant au basculement de l'étrier autour de ladite colonnette lorsque l'étrier occupe sa position normale de fonctionnement et pour permettre le basculement de ce dernier lorsque l'on désire procéder à l'extraction desdits organes de friction, des moyens élastiques étant prévus pour maintenir lesdites surfaces complémentaires en contact, caractérisé en ce que l'une desdites surfaces de coulissement axial présente une longueur limitée telle qu'un déplacement axial de l'étrier par rapport au support fixe sur une distance supérieure à ladite longueur limitée permet le basculement de l'étrier autour de ladite colonnette, lesdits moyens élastiques étant constitués par un ressort disposé entre ledit étrier et lesdits organes de friction.

L'invention sera maintenant décrite à titre d'exemple en se référant aux dessins annexés, dans lesquels:

—la figure 1 est une vue partielle selon la flèche A de la figure 1;

—la figure 2 est une vue partielle selon la flèche A de la figure 1;

—la figure 3 est une vue en section partielle selon la ligne 3—3 de la figure 2;
—la figure 4 est une vue en coupe selon la ligne 4—4 de la figure 1;
—la figure 5 est une vue en couple partielle selon la ligne 5—5 de la figure 4; et
—la figure 6 est une vue partielle en couple selon la ligne 6—6 de la figure 4.

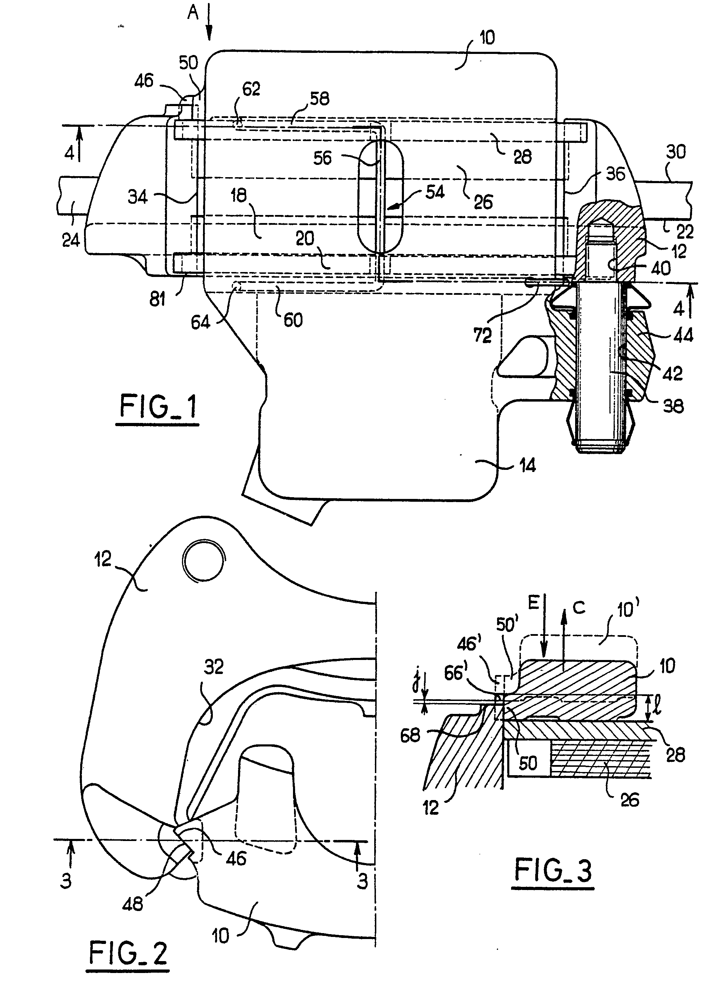

Le frein à disque représenté sur les figures 1 à 6 comprend un cadre étrier mobile 10 monté coulissant sur un organe support fixe 12. Des moyens de commande, constitués dans le mode de réalisation représenté par un moteur de frein hydraulique 14, sont associés à l'étrier 10 et disposés de façon à solliciter directement au moyen d'un piston 16 un organe de friction 18 comportant une plaque support 20 contre une première face 22 d'un disque de frein 24 associé à une roue du véhicule (non représentée). Par réaction, lors de la mise en oeuvre du moteur de frein 14 et de son piston 16, l'étrier 10 sollicite un second organe de friction 26 comportant une plaque support 28, contre la seconde face 30 du disque de frein 24.

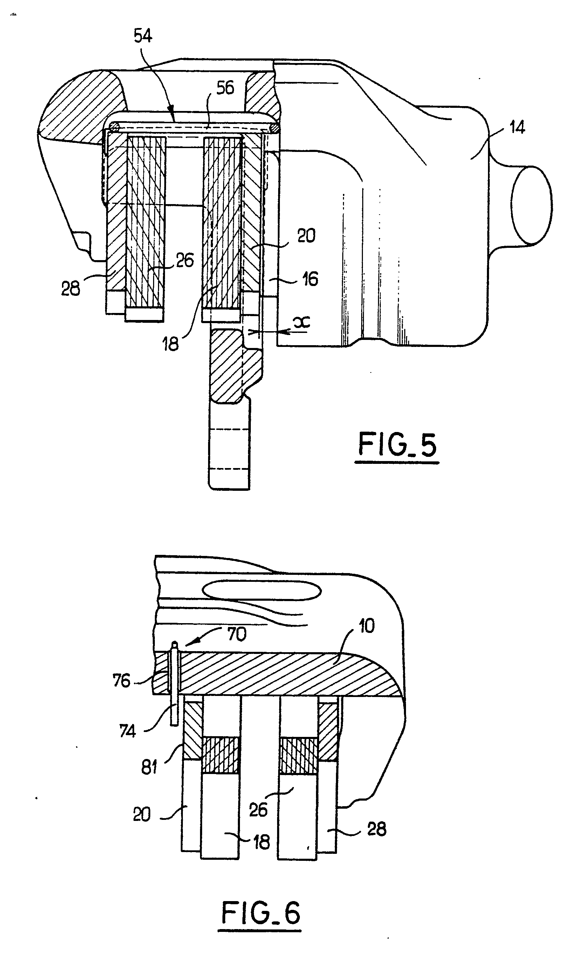

Comme le montrent en particulier les figures 1 et 5, le support fixe 12 est muni d'une ouverture 32 sont les bords circonférentiellement espacés 34 et 36 supportent en ancrage et en coulissement les organes de friction 18 et 26, de telle sorte que le support fixe 12 constitue pour ces derniers un organe support de couple.

L'étrier 10 est monté coulissant sur le support fixe 12 au moyen d'une colonnette axiale 38. Dans le mode de réalisation représenté et comme le montre plus particulièrement la figure 1, la colonnette 38 est associée au support fixe 12 par une liaison filetée 40. La colonnette 38 est reçue en coulissement dans un alésage 42 formé dans un bras 44 de l'étrier 10.

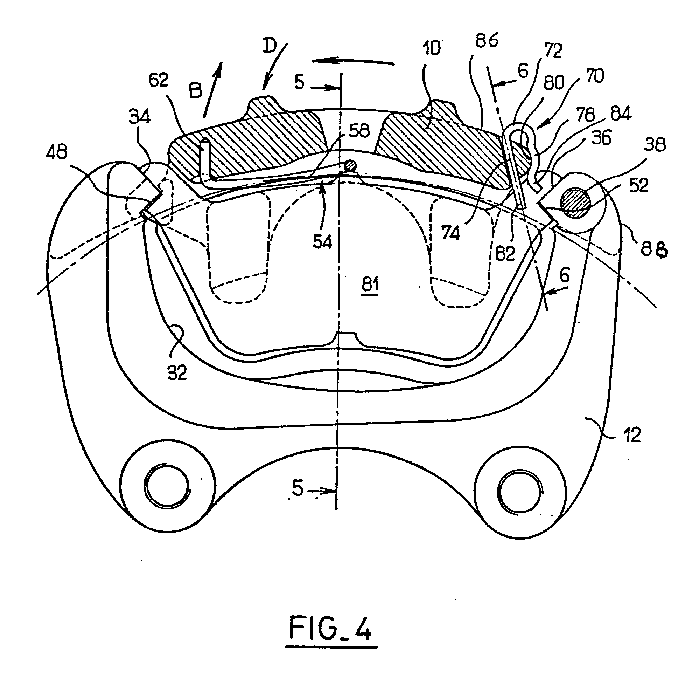

L'étrier 10 coopère en coulissement avec le support fixe 12 au moyen de deux surfaces de coulissement axial complémentaires 46 et 48. La surface de coulissement 46 est formée sur une projection 50 de l'étrier 10 qui s'étend parallèlement au disque 24 du côté opposé au bras 44. La surface complémentaire 48 est formée sur le support fixe 12. Comme le montrent les figures 1 et 4, la surface de coulissement axial 48 coopère avec le bord circonférentiel 34 de l'ouverture 32 pour permettre l'ancrage et le coulissement des organes de friction 18 et 26. D'une façon symétrique on a prévu une surface de coulissement axial 52 qui coopère avec le bord circonférentiel 36. Le frein à disque représenté sur les figures 1 à 6 occupe sa position normale de fonctionnement. Dans cette position et comme le montrent en particulier les figures 2 et 3, le contact entre les surfaces 46 et 48 s'oppose au basculement de l'étrier autour de la colonnette 38. Les surfaces 46 et 48 sont maintenues en contact au moyen d'un ressort 54. Le ressort 54 a sensiblement la forme d'un C. La branche centrale 56 du C s'étend parallèlement à l'axe de rotation du disque et prend appui sur les bords périphériques supérieurs des plaques support 20 et 28 des organes de friction 18 et 26 (voir Figure 5). Les branches extrêmes 58 et 60 du ressort 54 sont munies à leurs extrémités de prolongements 62 et 64, respectivement, qui sont emmanchés dans des alésages correspondants formés en vis-à-vis dans l'étrier 10. Le ressort 54 est ainsi fixé à l'étrier 10 et reste solidaire de ce dernier lors du démontage du frein. Comme la montre la figure 5, le ressort 54 prend appui sur les plaques support et sollicite l'étrier 10 dans la direction indiquée par la flèche B. On comprend ainsi que les moyens élastiques constitués par le ressort 54 ont pour première fonction, de maintenir les surfaces 46 et 48 en contact et, pour deuxième fonction, d'agir comme resort anti-bruit pour les organes de friction 18 et 26. En effet, la branche centrale 56 du ressort 54 sollicite les plaques support 20 et 28 en appui sur les surfaces d'ancrage et de coulissement 34 et 36 et s'oppose ainsi à toutes les vibrations parasites pouvant apparaître entre les organes de friction et le support fixe.

Conformément à l'invention la surface de coulissement 46 formée sur l'étrier présente une longueur axiale "1" limitée (voir Figure 3). On a représenté à la figure 3 l'étrier 10 dans sa position normale de fonctionnement ainsi que la position qu'il occupe lorsque l'on désire basculer l'étrier autour de la colonnette 38 pour procéder au remplacement des organes de friction. Dans cette dernière position, repérée par des références identiques munies d'un' il existe un jeu fonctionnel j entre le bord transversal 68 de la surface de coulissement 48 et le bord transversale 66' de la surface de coulissement 46'. Ce jeu j permet de faire basculer l'étrier 10 autoure de la colonnette 38 et de dégager ainsi l'accès aux organes de friction 18 et 26 lorsque l'on désire procéder au remplacement de ces derniers.

Afin d'éviter tout basculement accidentel de l'étrier 10 lorsque ce dernier occupe sa position normal de fonctionnement, on a prévu des moyens de butée axiale amobiles associés à l'étrier. Il est en effet souhaitable d'éviter un déplacement axial de l'étrier, dans la direction indiquée par la flèche C sur une distance supérieure à la longueur "l" lorsque l'ensemble des composants occupent leur position normale de fonctionnement. Dans ce but et conformément à l'invention, on a prévu des moyens formant butée 70. Ces moyens formant butée sont constitués par une goupille 72 réalisée en fil métallique. La goupille 72 a sensiblement la forme d'une épingle à cheveux dont une branche 74 est introduite dans un alésage 76 formé dans l'étrier 10, et dont l'autre branche 78 coopère élastiquement avec le bord 80 de l'étrier 10 pour assurer l'immobilisation de la goupille.

Comme on peut le constater aux figures 1, 4 et 6, la goupille 72 coopère avec la face non garnie 81 de la plaque support 20 de l'organe de friction 18. La face 81 constitue une surface de butée sur laquelle les extrémités 82 et 84 des branches 74 et 78 de la goupille 72 viennent prendre appui lorsque l'étrier 10 se déplace dans la direction indiquée par la flèche C.

Le remplacement des organes de friction 18 et 26 s'effectue de la manière suivante:

Après avoir retiré la goupille 72 de l'étrier 10, on déplace l'étrier axialement dans la direction indiquée par la flèche C jusqu'à amener l'étrier dans la position indiquée en 10' (voir figure 3). Lors de ce déplacement le piston 16 recule dans son alésage jusqu'à ce que la distance "x" soit égale à 0 (voir figure 5). Dans la position 10', l'étrier peut basculer autour de la colonnette 38 dans la direction indiquée par la flèche B (figure 3). Ce basculement s'effectue automatiquement sous l'effet de la sollicitation appliquée à l'étrier par le ressort 54 qui prend appui sur les organes de friction 18 et 26. Le ressort 54 étant fixé à l'étrier, il suit ce dernier dans son basculement. Lorsque l'étrier a atteint sa position maximale de basculement dans laquelle la partie supérieure 86 de l'étrier vient en appui sur la partie 88 du support fixe 12, on peut extraire les organes de friction usés en les faisant coulisser sur les bords 34 et 36 de l'ouverture 32. On procéde alors au montage d'organes de friction neufs que l'on amène, par coulissement axial, en contact avec les surfaces correspondantes 22 et 30 du disque 12. On bascule l'étrier 10 autour de la colonnette 38 jusqu'à ce que la branche 56 de ressort 54 soit en contact avec la partie supérieure des plaques support des nouveaux organes de friction. Dans cette position on applique un effort à l'étrier 10 dans la direction indiquée par la flèche D afin de comprimer le ressort 54 et d'amener l'étrier 10 dans sa position 10'. Il ne reste plus ensuite qu'à faire coulisser l'étrier dans la direction indiquée par la flèche E afin d'amener la surface 46 en vis-à-vis de la surface 48. On relâche alors l'effort appliqué sur l'étrier de façon à mettre les surfaces 46 et 48 en contact. Il ne reste plus alors qu'à remettre en place la goupille 72 dans son alésage 76 afin d'éviter tout échappement axial accidentel de l'étrier dans la direction A comme a été décrit plus haut.

**Revendications**

1. Frein à disque dont l'étrier (10) est monté coulissant sur un support fixe (12) dans une ouverture (32) duquel sont reçus en ancrage et en coulissement axial deux organes de friction (18, 26) susceptibles de venir en engagement de friction avec les faces opposées (22, 30) d'un disque tournant (24) lors de la mise en oeuvre d'un moteur de frein (14) agissant directement sur l'un des organes de friction (18) et, par réaction au travers de l'étrier coulissant (10), sur l'autre organe de friction (26), ledit étrier (10) étant monté coulissant au moyen d'une colonnette axiale (38) fixée à l'étrier (10) ou au support fixe (12) et qui coopère avec un alésage (40, 42) formé en vis-à-vis dans le support fixe (12) ou dans l'étrier (10) et au moyen de deux surfaces complémentaires de coulissement axial (46, 48), formées sur l'étrier et sur le support fixe, pour permettre des mouvements relatifs de l'étrier (10) par rapport au support fixe (12) tout en s'opposant au basculement de l'étrier autour de ladite colonnette (38) lorsque l'étrier occupe sa position normale de fonctionnement et pour permettre le basculement de ce dernier lorsque l'on désire procéder à l'extraction desdits organes de friction (18, 26), des moyens élastiques (54) étant prévus pour maintenir lesdites surfaces complémentaires (46, 48) en contact, caractérisé en ce que l'une desdites surfaces de coulissement axial (46) présente une longueur limitée (1) telle qu'un déplacement axial de l'étrier (10) par rapport au support fixe (12) sur une distance supérieure à ladite longueur limitée (1) permet le basculement de l'étrier (10) autour de ladite colonnette (38), lesdits moyens élastiques (54) étant constitués par un ressort disposé entre ledit étrier (10) et lesdits organes de friction (18, 26).

2. Frein à disque selon la revendication 1, caractérisé en ce qu'il comporte des moyens de butée (70) amovibles limitant le déplacement axial de l'étrier 10.

3. Frein à disque selon la revendication 2, caractérisé en ce que lesdits moyens de butée comprennent un organe formant butée (72), fixé de façon démontable sur l'étrier (10) coopérant avec une surface de butée (81) formée en vis-à-vis sur un desdits organes de friction (18, 26).

4. Frein à disque selon la revendication 3, caractérisé en ce que ledit organe formant butée (72) est une goupille en fil métallique.

5. Frein à disque selon la revendication 1, caractérisé en ce que ladite surface de coulissement axial de longueur limitée (46) est formée sur l'étrier (10).

6. Frein à disque selon la revendication 5 dans lequel les organes de friction (18, 26) sont reçus en coulissement axial sur deux surfaces d'ancrage et de coulissement axial (48, 52) formées sur des bords circonférentiellement espacés (34, 36) de ladite ouverture (32) dans ledit support fixe (12), caractérisé en ce que ladite surface de longueur limitée formée sur l'étrier (46) coopère avec l'une (48) desdites surfaces de guidage axial des organes de friction.

7. Frein à disque selon la revendication 1, caractérisé en ce que ledit ressort (54) est fixé à l'étrier (10) et prend appui sur les plaques support (20, 28) desdits organes de friction.

8. Frein à disque selon la revendication 7, caractérisé en ce que ledit ressort (54) a sensiblement la forme d'un C dont la branche centrale prend appui sur lesdits plaques support (20, 28) et dont les extrémités (62, 64) des branches extrêmes (58, 60) dudit ressort en forme de C sont fixées audit étrier (10).

**Patentansprüche**

1. Scheibenbremse, dessen Bremssattel (10) auf einem ortsfesten Bremsträger (12) gleitend gelagert ist, wobei in einer Öffnung (32) desselben zwei Reibelemente (18, 26) gleitend gelagert sind, die mit den gegenüberliegenden Reibflächen (22, 30) einer umlaufenden Bremsscheibe (24) in Reibanlage treten, wenn eine Bremsbetätigungsvorrichtung (14) betätigt wird, die direkt auf eines der Reibelemente (18) und indirekt über den gleitenden Bremssattel (10) auf das andere Reibelement (26) einwirkt, wobei der Bremssattel (10) mittels eines axialen Bolzens (38) gleitend gelagert ist, der am Bremssattel (10) oder am Bremsträger (12) befestigt ist und der mit einer Bohrung (40, 42) zusammenwirkt, die gegenüberliegend im Bremsträger (12) oder im Bremssattel (10) gebildet ist sowie mittels zweier komplementärer axialer Gleitflächen (46, 48), die am Bremssattel und am Bremsträger gebildet sind, um Relativbewegungen des Bremssattels (10) bezüglich des Bremsträgers (12) zu ermöglichen, während sie einer Kippbewegung des Bremssattels um den Bolzen (38) entgegenwirken, wenn der Bremssattel seine normale Betriebsstellung einnimmt, und um eine Kippbewegung des letzteren zu ermöglichen, wenn die Reibelemente (18, 26) ausgewechselt werden sollen, wobei elastische Mittel (54) vorgesehen sind, um die komplementären Gleitflächen (46, 48) in Berührung zu halten, dadurch gekennzeichnet, daß die eine der axialen Gleitflächen (46) eine begrenzte Länge (1) aufweist, derart, daß bei einer Axialverschiebung des Bremssattels (10) bezüglich des Bremsträgers (12) um eine Strecke, die größer ist als die besagte begrenzte Länge (1), der Bremssattel (10) um den Bolzen (38) kippen kann, wobei die elastischen Mittel (54) von einer Feder gebildet werden, die zwischen dem Bremssattel (10) und den Reibelementen (18, 26) angeordnet ist.

2. Scheibenbremse nach Anspruch 1, gekennzeichnet durch entfernbare Anschlagmittel (70), die die Axialverschiebung des Bremssattels (10) begrenzen.

3. Scheibenbremse nach Anspruch 2, dadurch gekennzeichnet, daß die Anschlagmittel einen Anschlagkörper (72) aufweisen, der abnehmbar am Bremssattel (10) angebracht ist, der mit einer Anschlagfläche (81) zusammenwirkt, die gegenüberliegend an einem der Reibelemente (18, 26) gebildet ist.

4. Scheibenbremse nach Anspruch 3, dadurch gekennzeichnet, daß der Anschlagkörper (72) ein Splint aus Metalldraht ist.

5. Scheibenbremse nach Anspruch 1, dadurch gekennzeichnet, daß die axiale Gleitfläche begrenzter Länge (46) am Bremssattel (10) gebildet ist.

6. Scheibenbremse nach Anspruch 5, bei der die Reibelemente (18, 26) axial gleitend auf zwei axialen Lager- und Gleitflächen (48, 52) aufgenommen sind, die an beabstandeten Umfangsrändern (34, 36) der besagten Öffnung (32) im Bremsträger (12) gebildet sind, dadurch gekennzeichnet, daß die besagte Gleitfläche begrenzter Länge, die am Bremssattel (46) gebildet ist, mit der einen (48) der besagten axialen Führungsflächen der Reibelemente zusammenwirkt.

7. Scheibenbremse nach Anspruch 1, dadurch gekennzeichnet, daß die Feder (54) am Bremssattel (10) befestigt ist, und an den Belagträgern (20, 28) der Reibelemente abgestützt ist.

8. Scheibenbremse nach Anspruch 7, dadurch gekennzeichnet, daß die Feder (54) im wesentlichen die Form eines C hat, dessen Mittelschenkel an den Belagträgern (20, 28) abgestützt ist, während die Enden (62, 64) der Außenschenkel (58, 60) der C-förmigen Feder am Bremssattel (10) befestigt sind.

**Claims**

1. A disk brake having a caliper (10) slidingly mounted upon a fixed support (12) having an aperture (32) to receive a pair of friction elements (18, 26) axially slidingly supported therein, which friction elements are adapted to frictionally engage opposite faces (22, 30) of a rotating disk (24) upon actuation of a brake actuator (14) acting directly upon one of the friction elements (18) and by reaction via the sliding caliper (10) upon the other friction element (26), said caliper (10) being slidingly mounted by means of an axial column (38) connected to the caliper (10) or to the fixed support (12) and cooperating with a bore (40, 42) formed opposite thereto in the fixed support (12) or in the caliper (10), and by means of a pair of complimentary axial sliding surfaces (46, 48) formed upon the caliper and upon the fixed support for permitting relative movement of the caliper (10) with respect to the fixed support (12), for preventing pivoting of the caliper about said column (38) while the caliper is in its normal position of operation, and for permitting pivoting of the latter if it is desired to remove said friction elements (18, 26), resilient means (54) being provided for maintaining said complimentary surfaces (46, 48) in contact, characterized in that the one of said axial sliding surfaces (46) has a limited length (1) such that an axial displacement of the caliper (10) with respect to the fixed support (12) about a distance greater than said limited length (1) permits pivoting of the caliper (10) about said column (38), said resilient means (54) comprising a spring disposed between said caliper (10) and said friction elements (18, 26).

2. The disk brake of claim 1, characterized in that it comprises removable abutment means (70) limiting axial displacement of the caliper (10).

3. The disk brake of claim 2, characterized in that said abutment means comprise a member forming an abutment (72), removably fixed to the caliper (10) cooperating with an abutment surface (81) formed opposite thereto upon one of said friction elements (18, 26).

4. The disk brake of claim 3, characterized in that said member forming an abutment (72) is a metal wire pin.

5. The disk brake of claim 1, characterized in that said axial sliding surface of limited length (46) is formed upon the caliper (10).

6. The disk brake of claim 5, wherein the friction elements (18, 26) are axially slidingly received upon a pair of supporting and axial sliding surfaces (48, 52) formed upon spaced circumferential edges (34, 36) of said opening (32) in said fixed support (12), characterized in that said surface of limited length formed upon the caliper (46) cooperates with the one (48) of said axial guide surfaces of the friction elements.

7. The disk brake of claim 1, characterized in that said spring (54) is fixed to the caliper (10) and engages the support plates (20, 28) of said friction elements.

8. The disk brake of claim 7, characterized in that said spring (54) has substantially the form of a C having a central leg engaging said support plates (20, 28) and having outer legs (58, 60) whose extremities (62, 64) are fixed to said caliper (10).

0 030 502

FIG_1

FIG_2

FIG_3

FIG_4

FIG_5

FIG_6